# EUROPEAN PATENT SPECIFICATION

(11) **EP 2 635 947 B1**
(45) Date of publication and mention of the grant of the patent: **06.03.2019**
(21) Application number: 11834786.3
(22) Date of filing: 15.08.2011
(51) Int. Cl.: G06F 1/16, G06F 3/0354, G06F 3/041

(54) **PORTABLE COMPUTER WITH TOUCH PAD**
TRAGBARER RECHNER MIT TOUCHPAD
ORDINATEUR PORTABLE À PAVÉ TACTILE

(30) Priority: 19.10.2010 US 275724 P; 18.10.2010 US 394037 P
(43) Date of publication of application: 11.09.2013
(60) Divisional application: 19154582.1
(73) Proprietor: Apple Inc., Cupertino CA 95014 (US)
(72) Inventor: DEGNER, Brett William, California 95014 (US); CASEBOLT, Matthew Phillip, California 95014 (US); BROCK, John M., California 95014 (US); KESSLER, Patrick, California 95014 (US); OSBORN, Jay, California 95014 (US)
(74) Representative: Gillard, Matthew Paul
(86) International application number: PCT/US2011/047803
(87) International publication number: WO 2012/054127

(56) References cited:
- EP-A1- 2 202 619
- JP-A- 2008 225 980
- TW-U- M 377 644
- US-A1- 2004 027 341
- US-A1- 2005 057 525
- US-A1- 2005 259 069
- US-A1- 2006 146 031
- US-A1- 2009 154 094
- US-A1- 2010 001 956
- "MacBook Air Presentation", , 27 July 2009 (2009-07-27), XP054975894, Retrieved from the Internet: URL:https://www.youtube.com/watch?v=O4IQvH YoJTE [retrieved on 2015-06-04]
- "Steve Jobs introduces new MacBook trackpad - 2008", , 15 October 2008 (2008-10-15), XP054975896, Retrieved from the Internet: URL:https://www.youtube.com/watch?v=Znq2-C T7VRk [retrieved on 2015-06-04]
- JoshuaG: "Macworld San Francisco 2008-The MacBook Air Intro (Pt. 1)", You Tube, 16 January 2008 (2008-01-16), page 1, XP054977969, Retrieved from the Internet: URL:https://www.youtube.com/watch?v=OIV6pe KMj9M [retrieved on 2017-12-19]

## Description

### TECHNICAL FIELD

The present invention relates generally to portable computing devices. More particularly, the present embodiments relate to portable computing systems having touch pads and methods of assembling such portable computing devices.

### BACKGROUND

The outward appearance of a portable computing device, including its design and its heft, is important to many consumers and users. The outward appearance contributes to the overall impression that the user has of the portable computing device, which can be, for example, a laptop computer. At the same time, the assembly of the portable computing device is also important to the user, as a durable assembly will help extend the overall life of the portable computing system and will increase its value to the user.

One design challenge associated with the manufacture of portable computing systems is the design of the outer enclosures used to house the various internal computing components. This design challenge generally arises from a number conflicting design goals that include the desirability of making the outer enclosure or housing lighter and thinner, of making the enclosure stronger, and of making the enclosure aesthetically pleasing, among other possible goals. Lighter housings or enclosures tend to be more flexible and therefore have a greater propensity to buckle and bow, while stronger and more rigid enclosures tend to be thicker and carry more weight. Unfortunately, increased weight may lead to user dissatisfaction with respect to clunkiness or reduced portability, while bowing may damage internal parts or lead to other failures. Further, few consumers desire to own or use a device that is perceived to be ugly or unsightly. Due to such considerations, portable computing device enclosure materials are typically selected to provide sufficient structural rigidity while also meeting weight constraints, with any aesthetic appeal being worked into materials that meet these initial criteria.

As the drive for smaller and thinner portable computing devices continues, it becomes necessary for various internal components to become smaller or otherwise be arranged to take up less volume. One particular example of such a component can be a touch pad input device located on a portable computing device. As the outer housing and entire device becomes smaller, there may be less space for a touch pad and any associated components. While the overall arrangement for such a touch pad and any supporting or associated items should preferably be smaller, it would still be desirable to retain full functionality and size at the point of interfacing for a user.

Therefore, it would be beneficial to provide a portable computing system and an associated touch pad that are aesthetically pleasing, lightweight, smaller and yet durable. It would also be beneficial to provide methods for assembling the portable computing system and touch pad therein.

US2009/0154094 discloses an electronic apparatus with a first housing and a second housing. The first housing is trapezoidally shaped, and includes a trackpad and a keyboard.

TW M377644U1 discloses a touchpad module assembly including a housing and a touch module. The touch module is assembled within a concave area of the housing and is held using a position pin and a hook.

The video "Steve Jobs introduces a new Macbook trackpad - 2008" (https://www.youtube.com/watch?v=Znq2-CT7VRk) discloses a multi-touch glass trackpad.

The video "Macworld San Francisco 2008-The MacBook Air Intro (Pt. 1)" (https://www.youtube.com/watch?v=OIV6peKMj9M) shows a thin, lightweight portable computing device.

### SUMMARY

The present application describes various embodiments that relate to systems and methods for providing a lightweight and durable portable computing device having an associated touch pad. This can be accomplished at least in part through the use of a specially designed touch pad that takes up less volume along at least one edge, such that placement proximate the thin portion of a wedge shaped outer housing is possible. The invention is defined by the appended independent claims. Further aspects of the invention are outlined in the dependent claims. Embodiments which do not fall within the scope of the claims do not form part of the present invention.

In various embodiments, a portable computing device includes at least a base portion having a top case and a bottom case, each being formed of a lightweight and strong material. The top case can be wedge shaped and the bottom case can be coupled to the top case to form a complete housing for a plurality of operational components and a plurality of structural components. The portable computing device can also include a lid portion pivotally connected to the base portion by a hinge assembly. The lid portion can have a display in communication with one or more of the components in the base portion, with one or more electrical conductors electrically connecting the base portion to the lid portion. In one aspect of the described embodiments, the computing device takes the form of a laptop computer.

In various embodiments, a portable computing device can include a base portion formed from a lightweight material and including a wedge shaped top case coupled to a bottom case to form a complete housing for at least a portion of the portable computing device, the complete housing enclosing at least a plurality of operational components and a plurality of structural components. The portable computing device can also include a lid portion pivotally connected to the base portion by a hinge assembly, the lid portion having a display in communication with one or more of the components in the base portion, a keyboard located on the base portion and adapted to accept inputs from a user of the portable computing device, and a touch pad adapted to accept touch inputs from a user of the portable computing device and located within the base portion proximate the thinnest part of the wedge shaped top case.

The touch pad can include a top layer formed from glass and having a top surface adapted to accept the touch inputs from a user. The glass layer can have a thickness that is not uniform across the entire glass layer, and can be adapted to provide primary structural rigidity for the entire touch pad. The touch pad can also include a cosmetic layer located below the glass layer, a sensor layer bonded to the cosmetic layer and adapted to detect inputs at the top surface of the glass layer, circuitry adapted to process signals from the sensor layer and the keyboard, a connection interface that connects the circuitry to a main logic board on the portable computing device, and a keyboard connection interface adapted to connect the circuitry to the keyboard. The circuitry can also be adapted to process signals from the keyboard. In addition, the touch pad can include a dome switch embedded in a recessed region at a bottom surface of the touch pad, and a sealing mechanism associated with and situated proximate to the dome switch. The dome switch can be actuated by a downward force applied by a user at the top of the touch pad.

In some embodiments, the dome switch is constructed from a flexible material that partially encloses a volume of gas within the dome switch. The sealing mechanism surrounds the dome switch and includes one or more apertures, such that one or more portions of the dome switch expand through the one or more apertures during actuation of the dome switch.

In addition, the touch pad can include a plurality of structural wings located along the sides of the touch pad, such that the touch pad is retained within the base portion, which can include an opening proximate the touch pad in order to allow user access thereto.

Other apparatuses, methods, features and advantages of the invention will be or will become apparent to one with skill in the art upon examination of the following figures and detailed description.

### BRIEF DESCRIPTION OF THE DRAWINGS

The included drawings are for illustrative purposes and serve only to provide examples of possible structures and arrangements for the disclosed inventive apparatuses and methods for providing portable computing devices having touch pads. These drawings in no way limit any changes in form and detail that may be made to the invention by one skilled in the art without departing from the scope of the invention. The embodiments will be readily understood by the following detailed description in conjunction with the accompanying drawings, wherein like reference numerals designate like structural elements, and in which:
Figs. 1-6 show representative views of a portable computing system in accordance with the described embodiments.
Fig. 7 shows an external view of a bottom case in accordance with the described embodiments.
Fig. 8 shows an internal view of the bottom case shown in Fig. 7.
Figs. 9a and 9b show an exterior view of top case illustrating various openings used to accommodate a keyboard and a touch pad in accordance with the described embodiments.
Figs. 10a through 10c show a top case and feature plate assembly.
Fig. 11 is a perspective drawing of a touch pad in accordance with the described embodiments.
Fig. 12 is a side view of a touch pad and its orientation relative to the body portion of the housing in accordance with the described embodiments.
Fig. 13 is a cross-sectional view of the touch pad in accordance with the described embodiments.
Figs. 14a and 14b are cross sectional views of a dome switch associated with the touch pad prior to and after a force input to the touch pad in accordance with the described embodiments.
Fig. 15 shows an exploded view of a touch pad in accordance with the described embodiments.

### DETAILED DESCRIPTION

Exemplary applications of apparatuses and methods according to the present invention are described in this section. These examples are being provided solely to add context and aid in the understanding of the invention. It will thus be apparent to one skilled in the art that the present invention may be practiced without some or all of these specific details. In other instances, well known process steps have not been described in detail in order to avoid unnecessarily obscuring the present invention. Other applications are possible, such that the following examples should not be taken as limiting.

The following relates to a portable computing system such as a laptop computer, net book computer, tablet computer, etc. The portable computing system can include a multi-part housing having a top case and a bottom case joining at a reveal to form a base portion. The portable computing system can have an upper portion (or lid) that can house a display screen and other related components whereas the base portion can house various processors, drives, ports, battery, keyboard, touch pad and the like. The base portion can be formed of a multipart housing that can include top and bottom outer housing components each of which can be formed in a particular manner at an interface region such that the gap and offset between these outer housing components are not only reduced, but are also more consistent from device to device during the mass production of devices. These general subjects are set forth in greater detail below.

In a particular embodiment, the lid and base portion can be pivotally connected with each other by way of what can be referred to as a hollow clutch assembly. The hollow clutch assembly can be arranged to pivotally couple the base portion to the lid. The hollow clutch assembly can include at least a hollow cylindrical portion that in turn includes an annular outer region, and a central bore region surrounded by the annular outer region, the central bore suitably arranged to provide support for electrical conductors between the base portion and electrical components in the lid. The hollow clutch assembly can also include a plurality of fastening regions that couple the hollow clutch to the base portion and the lid of the portable computing system with at least one of the fastening regions being integrally formed with the hollow cylindrical portion such that space, size and part count are minimized.

The multipart housing can be formed of a strong and durable yet lightweight material. Such materials can include composite materials and or metals such as aluminum. Aluminum has a number of characteristics that make it a good choice for the multipart housing. For example, aluminum is a good electrical conductor that can provide good electrical ground and it can be easily machined and has well known metallurgical characteristics. Furthermore, aluminum is not highly reactive and non-magnetic which can be an essential requirement if the portable computing system has RF capabilities, such as WiFi, AM/FM, etc. In order to both protect the multipart housing and provide an aesthetically appealing finish (both visual and tactile), a protective layer can be placed or formed on an external surface of the multipart housing. The protective layer can be applied in such a way to both enhance the aesthetic appeal of the housing and to protect the appearance of the portable computing system. In one embodiment, when the multipart housing is formed of aluminum, at least an exterior surface of the aluminum can be anodized to form the protective layer.

The top case can include a cavity, or lumen, into which a plurality of operational components can be inserted during an assembly operation. In the described embodiment, the operational components can inserted into the lumen and attached to the top case in an "top-bottom" assembly operation in which top most components are inserted first followed by components in a top down arrangement. For example, the top case can be provided and shaped to accommodate a keyboard module. The keyboard module can include a keyboard assembly formed of a plurality of keycap assemblies and associated circuitry, such as a flexible membrane on which can be incorporated a switching matrix. In one embodiment, the keycap assemblies can take the form of low profile keycaps such as described in U.S. Patent Application Serial No. 12/712,102 entitled "STACKED METAL AND ELASTOMERIC DOME FOR KEY SWITCH" by Niu et al.

In one embodiment, a keycap assembly can be used to replace a power switch. For example, in a conventional keyboard each of a top row of keycaps can be assigned at least one function. However, by re-deploying one of the keycaps as a power button, the number of operational components can be reduced by at least eliminating the switch mechanism associated with the conventional power button and replacing it with the already available keycap assembly and associated circuitry.

In addition to the keyboard, the portable computing system can include a touch sensitive device along the lines of a touch pad, touch screen, etc. In those embodiments where the portable computing device includes a touch pad the touch pad can be formed from a glass material. The glass material provides a cosmetic surface and is the primary source of structural rigidity for the touch pad. The use of the glass material in this way significantly reduces the overall thickness of the touch pad compared to previous designs. The touch pad can include circuitry for processing signals from both a sensor associated with the touch pad and a keyboard membrane associated with the keyboard. Thus, separate circuitry previously used to process the signals from the keyboard membrane is eliminated.

The touch pad includes a dome switch for detecting an actuation of the touch pad that is covered with a sealing mechanism. The dome switch can include an electrical switch. The sealing mechanism can protect the electrical switch from dirt and moisture intrusion and hence, improve the robustness of the electrical switch. The sealing mechanism can include expansion gaps into which the dome switch can expand when it is compressed. During actuation, the use of the expansion gaps improves the force feedback response associated with the dome switch and the overall aesthetic feel of the touch pad.

In the embodiments where at least one of the top case and bottom case are formed of conductive material, such as aluminum, a good electrical ground plane or electrical ground can be provided. The ability to provide a good ground plane can be particularly advantageous due to the close proximity of the operational components to one another in the portable computing system. Due to this close proximity, it is desirable to isolate sources of significant RF radiation (such as a main logic board, or MLB) from those circuits, such as wireless circuits, that are sensitive to RF interference. In this way, at least the conductive top and/or bottom case be used to provide a good chassis ground that, in turn, can be used to electromagnetically isolate the circuits that produce RF energy from those components that are sensitive to RF energy. Moreover, by forming both top and bottom case with conductive material, the top and bottom case can be joined to form a base portion that can act as a Faraday cage that can effectively shield the external environment from EMI generated by the portable computing system. The Faraday cage like attributes of the base portion can also protect RF sensitive components from externally generated EMI.

In order to provide a pleasing aesthetic to the user, the shape of the portable computing system can have a profile that is pleasing to the eye and to the touch. In the described embodiments, the multipart housing can have a wedge shape. The wedge shape can be such that when the bottom surface of the portable computing system is placed upon a flat supporting surface, such as a table or desk, the angle presented by the wedge shaped housing (in particular the wedge shaped upper portion of the multipart housing) can present an easy to use keyboard arrangement and touch pad. In contrast to conventional portable computing systems such as laptop computers having a uniformly shaped housing with little or no angularity, the wedge shape of the portable computing system can improve user interaction with the touch pad and keyboard by presenting the touch pad surface and the keycaps in a more natural alignment with a user's fingers. In this way, improved ergonomics can help reduce an amount of stress and strain placed upon the user's wrists.

Due at least to the strong and resilient nature of the material used to form the multipart housing; the multipart housing can include a number of openings having wide spans that do not require additional support structures. Such openings can take the form of ports that can be used to provide access to internal circuits. The ports can include, for example, data ports suitable for accommodating cables (USB, Ethernet, FireWire, etc.) connecting external circuits. The openings can also provide access to an audio circuit, video display circuit, power input, etc.

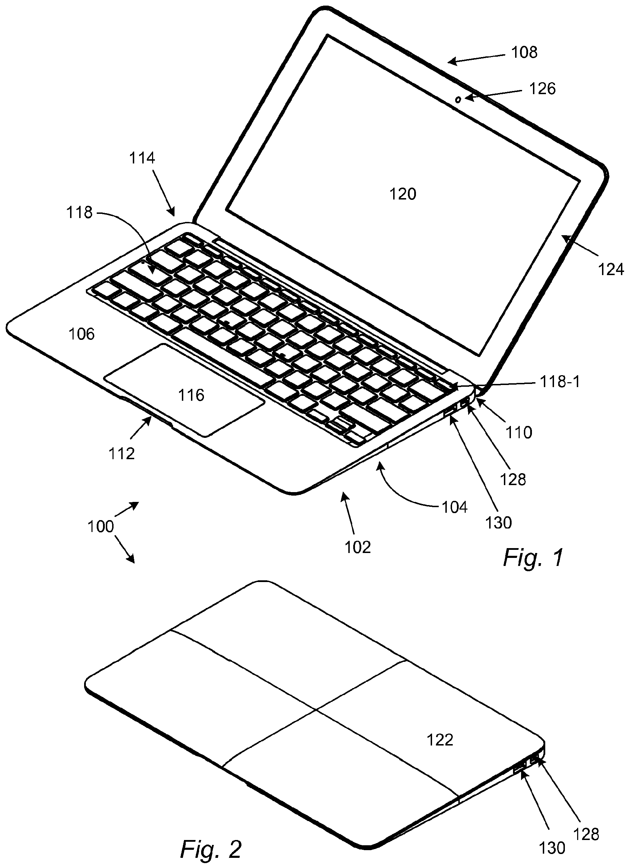

These and other embodiments are discussed below with reference to Figs. 1-15. However, those skilled in the art will readily appreciate that the detailed description given herein with respect to these figures is for explanatory purposes as the invention extends beyond these limited embodiments.

### Portable Computing Device

Figs. 1-6 show various views of portable computing system 100 in accordance with the described embodiments. Fig. 1 shows a front facing perspective view of portable computing system 100 in an open (lid) state whereas Fig. 2 shows portable computing system 100 in a close (lid) state. Portable computing system 100 can include base portion 102 formed of bottom case 104 fastened to top case 106. Base portion 102 can be pivotally connected to lid portion 108 by way of hollow clutch assembly 110 hidden from view by cosmetic wall 111. Base portion 102 can have an overall wedge shape having a first end sized to accommodate hollow clutch assembly 110. Base portion 102 can taper down to a more narrowly configured end arranged to accommodate inset portion 112 suitable for assisting a user in lifting lid portion 108 by, for example, a finger. In the described embodiment, the overall wedge shaped appearance of base portion 102 can be created by the overall wedge shape of top case 106. Top case 106 can be configured to accommodate various user input devices such as keyboard 114 and touch pad 116. Keyboard 114 can include a plurality of low profile keycap assemblies each having an associated key pad 118.

Each of the plurality of key pads 118 can have a symbol imprinted thereon for identifying the key input associated with the particular key pad. Keyboard 114 can be arranged to receive a discrete input at each keypad using a finger motion referred to as a keystroke. In the described embodiment, the symbols on each key pad can be laser etched thereby creating an extremely clean and durable imprint that will not fade under the constant application of keystrokes over the life of portable computing system 100. Touch pad 116 can be configured to receive a user's finger gesturing. A finger gesture can include touch events from more than one finger applied in unison. The gesture can also include a single finger touch event such as a swipe or a tap. In order to reduce component count, a keycap assembly can be re-provisioned as a power button. For example, key pad 118-1 can be used as power button 118-1. In this way, the overall number of components in portable computing system 100 can be commensurably reduced.

Lid portion 108 can include display 120 and rear cover 122 (shown more clearly in Fig. 2) that can add a cosmetic finish to lid portion 108 and also provide structural support to at least display 120. In the described embodiment, lid portion 108 can include bezel 124 that surrounds display 120. Lid portion 108 can be moved with the aid of hollow clutch assembly 110 from the closed position to remain in the open position and back again. Display 120 can display visual content such as a graphical user interface, still images such as photos as well as video media items such as movies. Display 120 can display images using any appropriate technology such as a liquid crystal display (LCD), OLED, etc. Portable computing system 100 can also include image capture device 126 located on bezel 124. Image capture device 126 can be configured to capture both still and video images. Display trim (or bezel) 124 can be supported by structural components (not shown) within lid portion 108 but attached to rear cover 122. Display trim 124 can enhance the overall appearance of display 120 by hiding operational and structural components as well as focusing attention onto the active area of display 120. Data ports 128 and 130 can be used to transfer data and/or power between an external circuit(s) and portable computing system 100. Lid portion 108 can be formed to have unibody construction that can provide additional strength and resiliency to lid portion 108 which is particularly important due to the stresses caused by repeated opening and closing. In addition to the increase in strength and resiliency, the unibody construction of lid portion 108 can reduce overall part count by eliminating separate support features

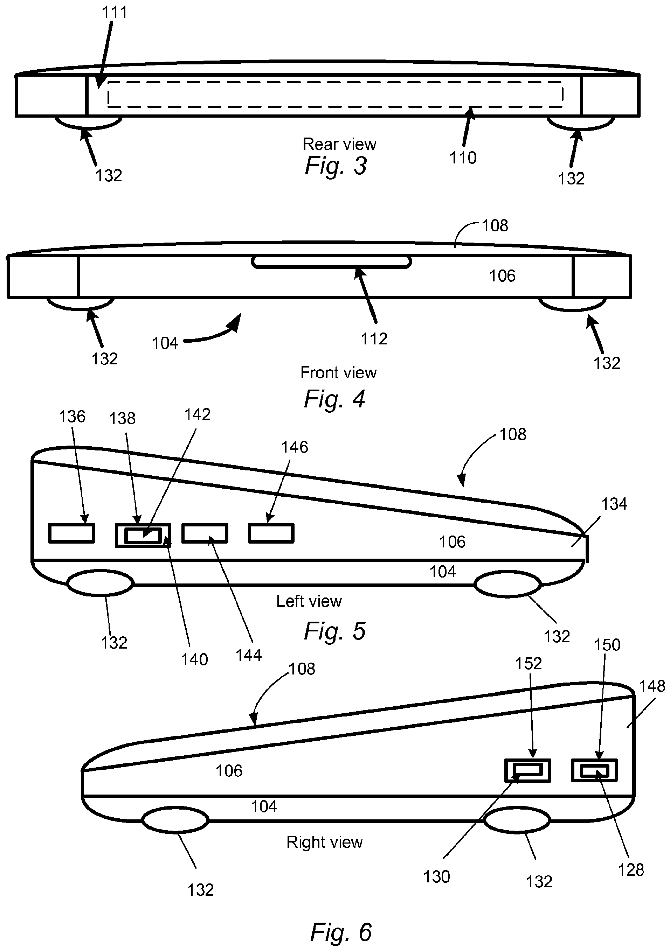

Turning now to Figs. 3-6 showing side views of portable computing system 100. More specifically, Fig. 3 shows a rear view of portable computing system 100 showing cosmetic feature 111 used to conceal hollow clutch assembly 110 and at least two support feet 132 that can be used to provide support to portable computing system 100. Support feet 132 can be formed of wear resistant and resilient material such as plastic. Fig. 4 shows representative front view of portable computing system 100 illustrating the relative position of insert 112 between top case 106 and lid portion 108. As shown in Fig. 5 illustrating a representative left side view of portable computing system 100 showing left side wall 134 of top case 106 having openings that can be used to accommodate various data and power ports. For example, opening 136 formed in left side wall 134 can be used to accommodate an Ethernet cable whereas opening 138 can be used to accommodate Magsafe™ receptacle 140. It should be noted that opening 138 must have a high aspect ratio in order to accommodate receptacle 140 due in part to a relatively large platform 142, or mesa that allows an appropriately configured power plug to more easily align to receptacle 140. In the particular embodiments described herein, audio receptacle 144 and side firing microphone 146 can be positioned on side wall 134. As shown in Fig. 6, right side wall 148 of top case 106 can include openings 150 and 152 used to accommodate data ports 128 (such as a USB data port) and 130 that can take the form of, respectively, a video port such a DisplayPort™ type video port.

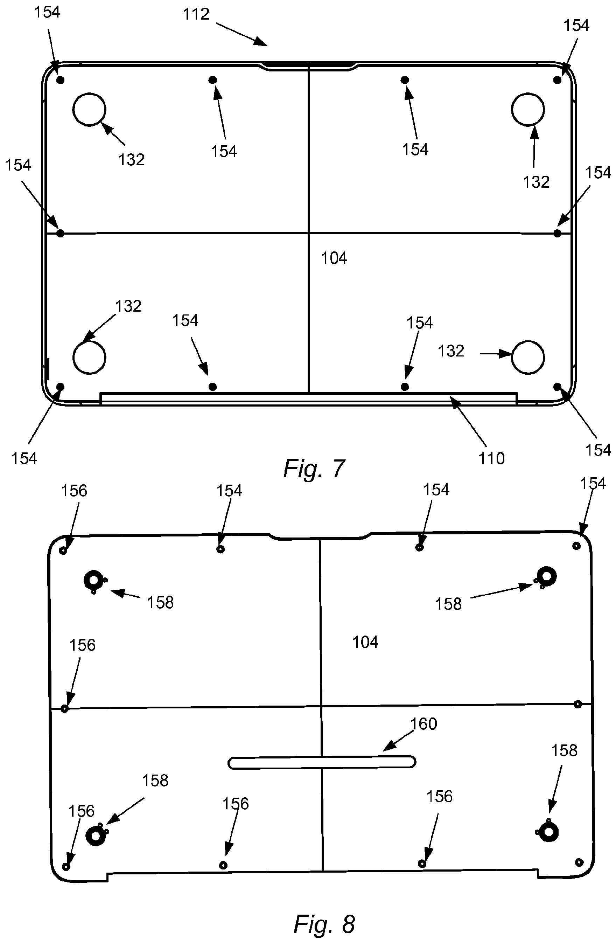

Fig. 7 shows an external view of bottom case 104 showing relative positioning of support feet 132, insert 112, exterior of hollow clutch assembly 110 and fasteners 154 used to secure bottom case 104 and top case 106 together. In the particular implementation described, fasteners 154 can take the form of tamper proof fasteners described in more detail below. Fig. 8 shows an internal view of bottom case 104 showing openings 156 used to accommodate fasteners 154. Moreover, fasteners 158 can be used to secure device feet 132 to bottom case 104. Standoff 160 can be used to provide support for bottom case 104 when attached to top case 106.

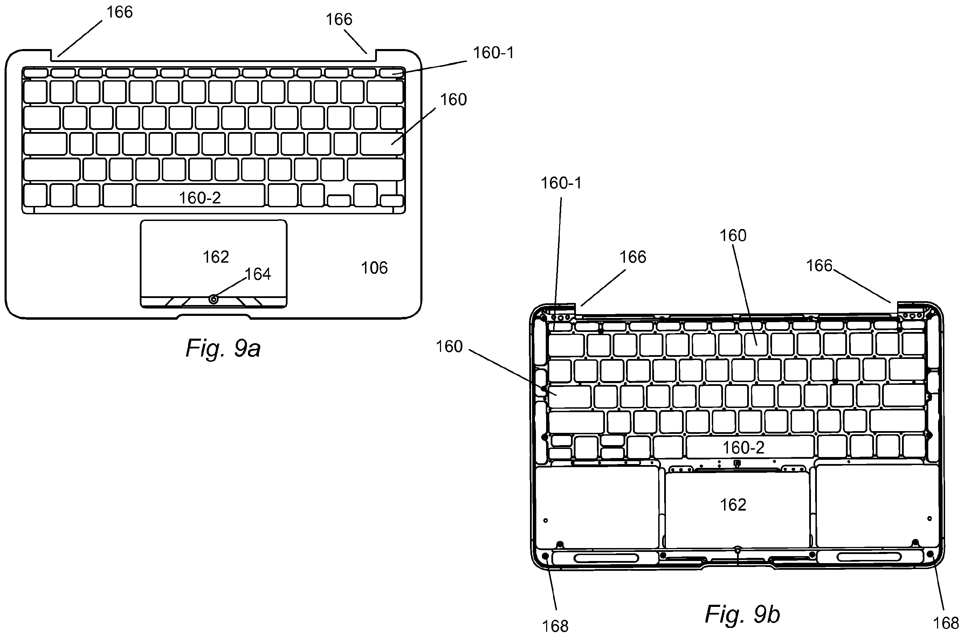

Figs. 9a and 9b show representative embodiments of top case 106. For example, Fig. 9a shows an exterior view of top case 106 illustrating various openings used to accommodate keyboard 114 and touch pad 116. More specifically, openings 160 can each have a size and shape in accordance with a specific key cap assembly. For example, opening 160-1 can be sized to accommodate power button 118-1 whereas opening 160-2 can be sized to accommodate a space bar. In addition to openings 160, opening 162 can provide support for touch pad 116. For example, opening 162 can include attachment feature 164 that can be used to secure the touch pad 116 to top case 106. Moreover, as seen in Fig. 9b showing the interior of top case 106, several additional attachment features can be seen that can be used to secure both touch pad 116 and keyboard 114. In a particular embodiment, keyboard 114 and touch pad 116 can share circuitry that can at least reduce an overall component count. In addition, notch 166 can be used in conjunction with hollow clutch assembly 110 to provide a more unified and integrated appearance to portable computing system 100. Attachment features 168 can be used to with opening 156 to secure bottom case 104 and top case 106 using any suitable fastener.

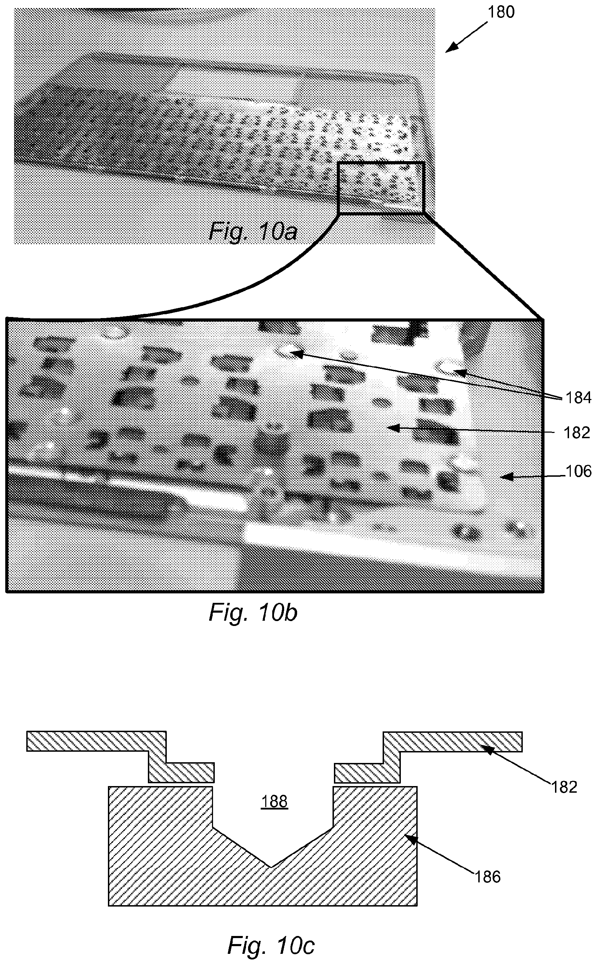

Figs. 10a through 10c show a top case and feature plate assembly 180. Fig. 10a shows the entire assembly 180 in obverse perspective view, while Fig. 10b is a close up view of a corner of the assembly. As shown in Fig. 10b, a feature plate 184 is fastened to top case 106 by way of numerous rivets 184. Numerous components can be disposed between the feature plate 184 and the top case 106, as will be readily appreciated. Fig. 10c depicts a partial cross section of one rivet location of feature plate assembly 180, which riveting is accomplished in a composite beam type manner. Feature plate 184, which can be a thin steel plate, for example, can be riveted at location 188 to an aluminum webbing 186 that is situated between various keycaps (not shown). Webbing 186 can in turn be coupled to top case 106, or can be integrally formed with the top case in some embodiments. Location 188 is preferably sized and shaped in order to accommodate a rivet that goes through a proximately placed location in feature plate 182.

Numerous advantages can be realized by way of having a feature plate 182 that is riveted to a top case 106 by way of multiple rivets 184 to enclose various internal components therein. For example, the combination of the top case 106 and a steel feature plate 182 can result in the creation of an effective EMI shield, and even a Faraday cage type shield in some embodiments. This EMI shielding effect is enhanced by the use of numerous fastening points held together by rivets, which tends to seal off the internal components of the keyboard better than when fewer fastening points are used, such as in a screw or bolt type arrangement. This EMI shield then effectively isolates the keyboard in an EMI sense from various other components in the computing device, such as the processor located directly below the keyboard or any antenna that may be at the device.

As another benefit, using a rivet rather than other types of fastening components, such as screws, bolts and the like results in no need for the fastening component to extend through the top case 106 or even the aluminum webbing 186 in order to affect a strong fastening of components. This is advantageous where a smooth and unbroken surface may be desired on the outside of the top case or aluminum webbing. This is also advantageous in that manufacturing riveting processes can be significantly faster than similar screwing or bolting processes, in that the obverse side of the components being riveted does not need to be accessed in some cases, such as that which is disclosed above. Another benefit that can be realized by using rivets instead of screws is that the overall assembly can be thinner, particularly since there is no longer a need to accommodate threaded structures or components, which can take up space.

While using rivets rather than screws or bolts tends to result in the need for a greater quantity of fastening components (i.e., rivets), since each rivet location tends to be weaker than each screw location in a similar assembly, this can be countered by using a composite beam type riveting arrangement for increased strength, and also a rapid riveting process to obtain the benefit of a smooth and unbroken obverse surface on one side of the assembly being riveted. The use of rivets rather than screws can lead to simpler manufacturing processes that tend to save costs, are faster, and can also result in the use of more fastening points, which in turn leads to greater integrity in components that are fastened together more reliably. The overall feel of a riveted together top case, keyboard and feature plate assembly is also improved by using rivets rather than screws, as the combination of components tends to be stiffer, more stable, and more affixed together as an overall assembly.

### Touch Pad

With respect to the following figures a number of features of the touch pad assembly are described. The touch pad assembly interfaces with a front of the body portion of the housing. The body portion of the housing can be wedge shaped, where the tip of the wedge is in a front edge of the body portion. As the tip of the wedge is approached, the volume that is available for packaging the components that are installed in this region of the body portion of the housing can be decreased. To accommodate the decreased volume available for packaging device components near the tip of the wedge and to improve overall the packing efficiency of the body portion of the housing, the touch pad can be designed with a number of features that decrease the volume that it and nearby components occupy.

As examples, to provide a thinner profile, the touch pad can be constructed from a material, such as glass, that serves as 1) cosmetic surface for the touch pad and 2) a load bearing structure. Further, the signal processing for the touch pad and the keyboard can be combined on the touch pad. The combined signal processing can eliminate a separate processing component and a connector to the MLB associated with the keyboard signal processing. The elimination of these components can improve the packing efficiency of the body portion of the housing.

Besides packing efficiency, the touch pad can be designed to produce a desired aesthetic performance. The aesthetic performance can include a "feel" provided to the user as the touch pad is utilized. The touch pad can be configured to 1) detect a change in position of an object, such as a user's finger over the top surface, and 2) detect a deflection of the touch pad resulting from a downward force exerted by the object. The touch pad can include a dome switch mounted on its bottom surface that is activated in response to a downward force provided by a user on a top surface of the touch pad. The dome switch can be sealed to prevent moisture ingress that can damage the dome switch. A sealing mechanism is described that can prevent moisture ingress and provide a desired aesthetic feel when the touch pad is operated.

In particular, the sealing mechanism can be configured with pathways that allow a volume associated with the dome switch to remain somewhat constant when the sensor is compressed during actuation of the touch pad. If the sealing mechanism was designed without these pathways, then the volume associated with the dome switch would be decreased during actuation. The resulting compression of the volume can result in force feedback response during actuation that is aesthetically undesirable.

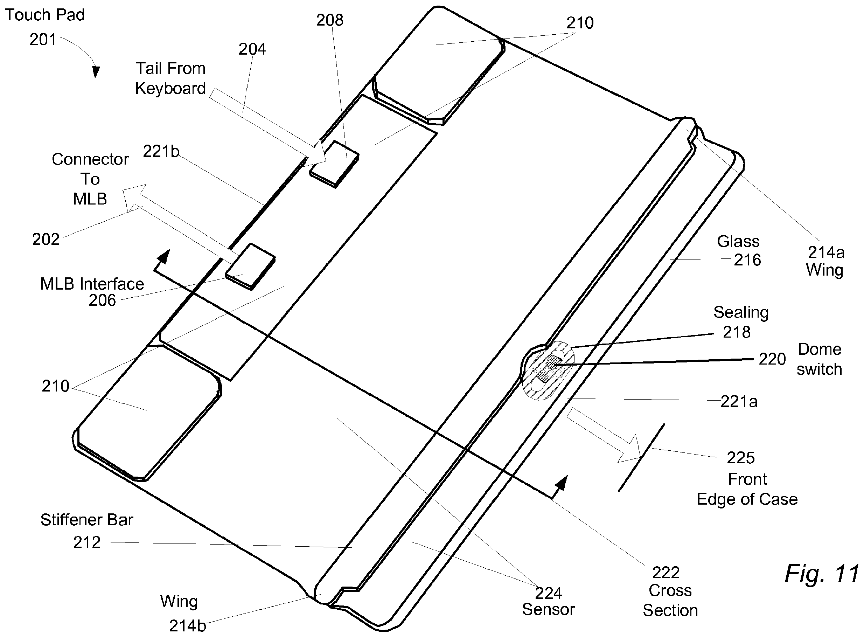

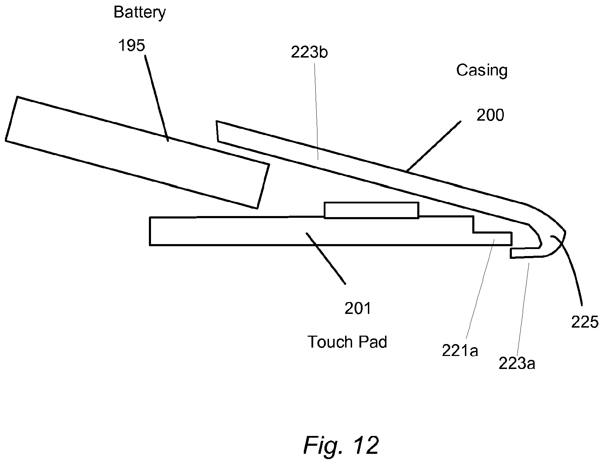

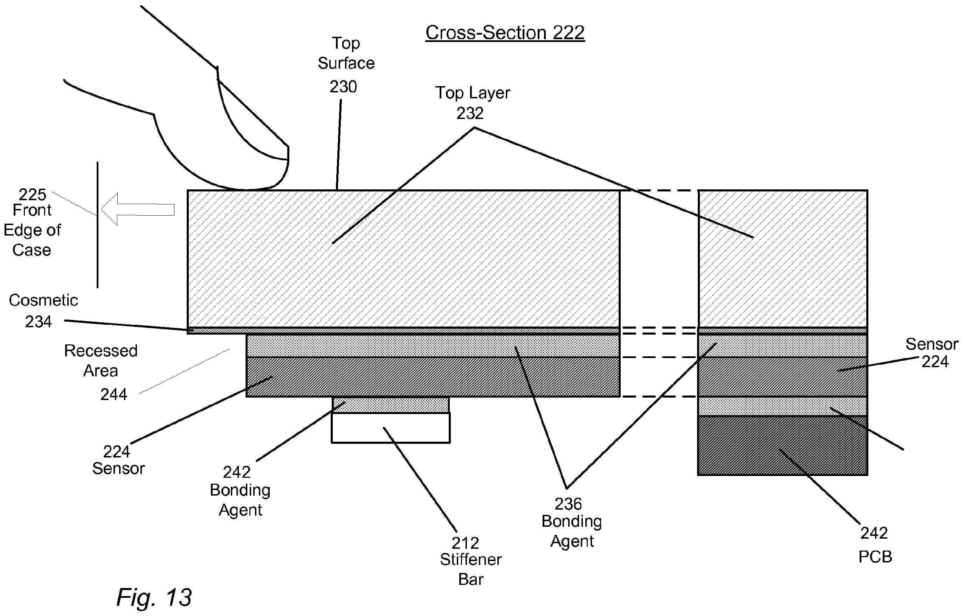

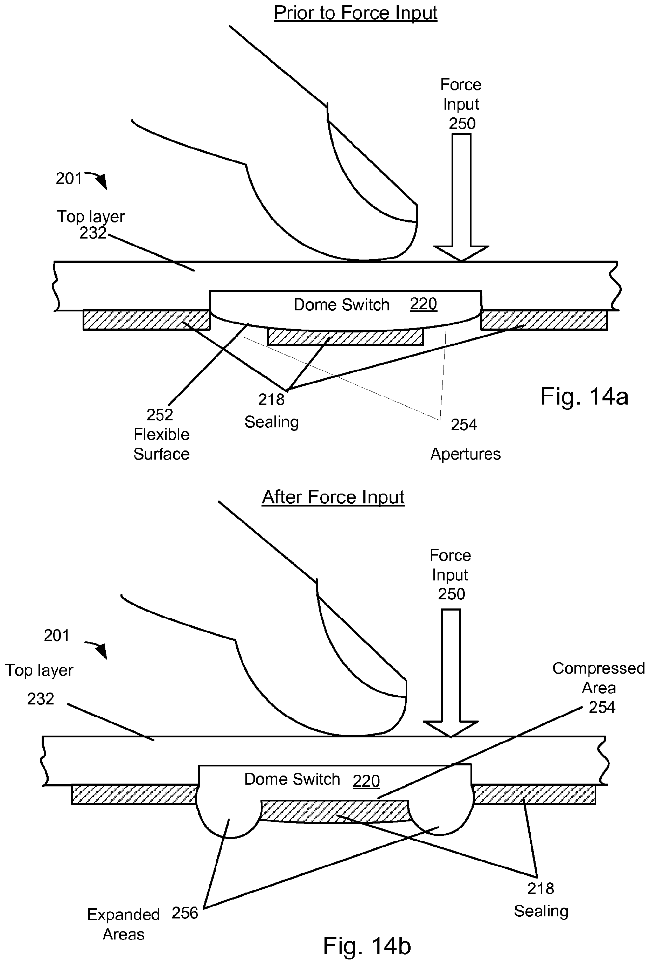

To illustrate the features described above, a perspective drawing of a touch pad viewed from a bottom surface is described with respect to Fig. 11. With respect to Figure 12, a proximate positioning of the touch pad within the body portion of the housing is discussed. In Fig. 13, a cross section of the touch pad at one location is shown and components associated with the cross section including a design configuration that can help provide an overall thinner cross section are discussed. With respect to Figs 14a and 14b, a sealing mechanism for the dome switch and the affect of the sealing mechanism on the internal volume of the dome switch during actuation of the touch pad are described. These figures are described with respect to the following paragraphs.

Fig. 11 is a perspective drawing of a touch pad 201 viewed from the bottom. A top surface of the touch pad 201 is flat and is configured to receive user inputs. The touch pad 201 can be approximately rectangular shaped, although other alternative shapes are certainly possible. The touch pad can include a front edge 221a and back edge 221b.

As is shown in Fig. 12, when installed in the body portion of the housing, the front edge 221a can be installed near a front 225 of the casing 200. The touch pad 201 can be installed underneath a lip portion 223a of the casing 200 such that is proximately aligned in a parallel manner with the lip portion. A top surface of the touch pad 201 can form a portion of the outer surface of the body portion of the housing. As described above, user inputs can be detected via the top surface of the touch pad 201.

A second portion 223b of the casing can extend at an angle from the front 225 to provide the wedge shape of the body portion of the housing. A portion of a battery 195 can be aligned proximately with the second portion 223b of the casing 200. Thus, the portion of the battery 195 and the touch pad 201 can be orientated at angle relative to one another in their installed position within the casing 225.

Returning to Fig. 11, key board and touch pad processing components 210 can be located near the back edge 221b of the bottom surface of the touch pad 201. The processing components can be configured to receive signals generated from 1) an actuation of a sensor, such as a membrane associated with the keyboard and 2) an actuation of one or more sensors associated with the touch pad 201, such as sensor 224 and the dome switch 220. The sensor 224 can be configured to detect a position and/or change in position of one or more objects on the top surface of the touch pad, such as the tips of one or more user's fingers. In one embodiment, the sensor can be constructed from a PET material.

The processing components 210 can include a keyboard interface 208. The keyboard interface 208 can be configured to receive a tail 204 from a keyboard. The tail 204 can be configured to communicate signals generated from user inputs received at the keyboard, such as signals generated via actuation of a membrane sensor associated with the keyboard. In other embodiments, the processing components associated with the keyboard can be provided separately from the touch pad 201 and the touch pad may not include a keyboard interface 208.

After processing, the signals from the touch pad and/or the keyboard can be sent to the main logic board (MLB) from 210. The signal processing 210 can include an MLB interface 206 that can be used to allow a connector, such as a flex connector, to be attached between processing components 210 and the MLB. In one embodiment, the connector can be configured to support a USB communication protocol.

The touch pad 201 can include a sensor 224 for detecting inputs. The sensor 224 can be configured such that it does not extend all the way to front edge 221a of the touch pad 201, which can reduce the thickness of the touch pad near the front edge. An advantage of reducing the thickness of the touch pad 201 in this area is that it can be help the packaging design in the limited volume near the front of casing 225.

In one embodiment, to further reduce the thickness of the touch pad, a portion of the glass 216 can be removed near the front edge 221a. The glass 216 can provide structural support for the touch pad 201. Thus, an amount of glass 216 that can be removed may be limited by a desire not to compromise the overall structural integrity of the touch pad in this area. For instance, if too much glass is removed, then undesirable cracking may occur near the front edge 221 where the glass 216 is thinned.

The touch pad 201 can include wings 214a and 214b. The wings 214a and 214b are located on the sides of the touch pad 201. The wings 214a and 214b can be located on the sides as opposed to near the front edge 221a of the touch pad to allow the touch pad to fit closer to the front 225 of the casing 200 and allow the length of the lip portion 223a to be shortened. If the wings were located on the front of the touch pad, then the front edge 221a would be extended away from the front of the casing 225 and a longer lip portion 223a of the casing 200 might be required.

The wings can be used to keep the touch pad 201 in the body portion of the casing 200. An aperture can be provided in the body portion of the casing 200 to expose the top surface of the touch pad 201 for user inputs. The wings can extend beneath structure in the casing 200 that surrounds the aperture. The wings can help prevent the touch pad from extending through the aperture and possibly opening up a gap that exposes an interior of the body portion.

In one embodiment, the touch pad 201 can include a stiffener bar 212. The stiffener bar can be used to increase the torsional rigidity of the touch pad 201. In one embodiment, the stiffener can be positioned across a bottom surface of the touch pad 201 proximate to the wing locations 214a and 214. In other embodiments, the stiffener can be positioned at another position. Further, touch pad is not limited to use of a single stiffeners and multiple stiffeners can be used. In yet other embodiments, the touch pad can be provided without a stiffener, such as 214.

In one embodiment, a dome switch 220 is located near the front edge 221a of the touch pad 201. The dome switch 220 can be configured to detect a press actuation of the touch pad 201 towards an interior portion of the casing 200. As described above, after passing through processing 210, a signal generated by the dome switch can be sent to the MLB via MLB interface 206.

In one embodiment, the dome switch 220 can be located near the center portion of the lower surface of the touch pad 201. In other embodiments, the dome switch 220 can be located in an off center position. In yet other embodiments, the touch pad 201 can include multiple dome switches. For example, the touch pad 201 can include two dome switches that are located near the front edge corners.

A sealing mechanism 218 can be provided over the dome switch 220. The sealing mechanism 218 can be used to prevent moisture and other contaminants from penetrating into the dome switch. In one embodiment, the sealing mechanism 218 can be designed to allow a volume associated with the dome switch to remain relatively constant during its actuation. As described above, the aesthetic feel of the dome switch 220 can be affected if the volume of the dome switch 220 is decreased too much during its actuation. Further details of the sealing mechanism 218 and its interaction with the dome switch 220 are described with respect to Figures 14a and 14b.

Next, a stacked configuration of the touch pad 201 is described in view of a cross-section taken at line 222 in Figure 11. Figure 13 is a cross-sectional view of the touch pad 201 proximate to line 222. As described above, the top surface 230 of the touch pad can be configured to receive inputs, such as an input generated when a user's finger comes into a contact with the top surface 230.

In one embodiment, a top layer 232 of the touch pad can be constructed from a translucent material, such as glass. The translucent material can provide the primary structural rigidity for the touch pad. In one embodiment, the top layer can be about 1.1 mm in thickness.

A cosmetic layer 234, such as an ink layer, can be located beneath the top layer. In one embodiment, the ink layer can be about .01 mm in thickness. The cosmetic layer can be used to affect the overall appearance of the top layer. For instance, the top layer can be silver colored to give the top layer a metallic appearance. In one embodiment, the pigments for the cosmetic layer can be selected to match another portion of the housing. For instance, the pigments can be selected to match a metallic portion of the housing if the housing is comprised of a metallic material. In another embodiment, the pigments can be selected to match a color of the keys in the keyboard, which can be a different color than other portions of the housing.

A sensor layer 224 can be located below the top layer 230 and the cosmetic layer 234. As described above, the sensor layer 224 can detect inputs received via the top surface 230 of the touch pad. In one embodiment, the sensor layer can be formed from a plastic material, such as PET. The sensor layer 224 may be about .2 mm thick. The sensor layer can be bonded to the cosmetic layer 234 using a bonding agent, such as a pressure sensitive adhesive (PSA). The PSA can be about .05 mm in thickness.

As described above, a stiffener bar 212 can be optionally provided to increase the structural rigidity of the touch pad. In particular embodiments, the stiffener bar 212 can be formed from a metallic or plastic material. The stiffener bar 212 can be coupled to the back of the sensor layer 224 using a bonding agent 242. In one embodiment, the bonding agent can be a PSA.

As described with respect to Fig. 11, circuitry can be located near a back edge of the bottom surface of the touch pad. The circuitry can be used to process signals from components, such as a key board sensor and/or the touch pad sensor. In a particular embodiment, the circuitry can be formed on a printed circuit board (PCB) 242. The PCB can be about .4 mm in thickness. In one embodiment, the PCB 242 can be mounted to the bottom of the touch pad, such as to a bottom of the sensor layer 224 using an adhesive, such as a pressure sensitive adhesive.

Next, a sealing mechanism 218 for the dome switch 220 shown in Figure 14a is described. The dome switch 220 can be configured to detect an inward deflection of the touch pad toward an interior of the body portion of the housing. The inward deflection can be generated as a result of a force input 250. The force input 250 can be generated as a result of user input, such as an input generated when a user presses down on the touch pad. Figure 14a is a cross sectional view of a dome switch 220 associated with the touch pad prior to a force input 250 and Figure 14b is a cross sectional view of the touch pad after a force 250.

In Fig. 14a, the dome switch 220 is shown embedded in a recessed surface of the track pad 201. For example, the dome switch can be recessed into a removed portion of the sensor layer and/or the top layer 232 of the touch pad 201. In other embodiments, the dome switch 220 can be mounted beneath the sensor layer and the top layer 232 so that it is not recessed. The dome switch 220 can be mounted using a bonding agent, such as a PSA. The bottom of the dome switch 220 can be orientated toward a bottom of the touch pad 201.

A portion of the dome switch 220 can be constructed from a flexible material. The flexible material can partially enclose a volume of gas within the dome switch. For example, a bottom surface portion 252 can be constructed from a flexible material that partially encloses a gas volume within the dome switch 220.

A portion of the dome switch 220 can be covered with a sealing mechanism 218. A top view of the sealing mechanism 218 is shown with respect to Fig. 14a. The sealing mechanism 218 can be formed from a material that is bonded to the bottom surface of the touch pad 201 and a bottom surface of the dome switch 220 via a bonding agent. As is shown in Figure 14a, the sealing mechanism 218 can surround the dome switch 220.

In particular embodiments, the sealing mechanism 218 can include one or more apertures. As is shown in Fig. 14a, a portion of the bottom surface of dome button can be exposed below the apertures 254 in the sealing mechanism 218. In the example of Fig. 14a, the sealing mechanism includes two apertures that expose two portions of the dome switch 220.

During actuation of the touch pad, a portion of the sealing mechanism 218 can be in contact with another surface. For instance, when the touch pad 201 is actuated in an inward manner towards an interior of the body portion of the housing, a portion of the sealing mechanism 218 can be pressed against another surface such that the sealing mechanism 218 and the underlying dome switch 220 are compressed. As the dome switch 220 is compressed, the portions 256 of the dome switch 220 below the apertures in the sealing mechanism can expand. For instances, areas 256 of the dome switch 220 can expand. The expanded area can allow the volume of gas contained in the dome switch to remain relatively constant during compression of the dome switch 220.

If the dome switch 220 was totally covered by a sealing mechanism that did not include apertures, then the dome switch 220 would not have room to expand as the sealing mechanism and the dome switch were compressed. During compression, the volume of the dome switch 220 would decrease and the pressure of the gas inside the sensor would increase. The increase in the gas pressure provides makes it more difficult.

The additional force that can be needed to compress a fully sealed dome switch can be undesirable from a user perspective, i.e., it can generate an undesirable aesthetic feel to the device. The apertures in the sealing mechanism can 218 allow the volume and hence the pressure within the dome switches 220 to remain relatively constant under compression. Thus, the force to further actuate the touch pad may remain relatively constant during actuation of the touch pad, which can provide a more desirable aesthetic feel to a user of the touch pad.

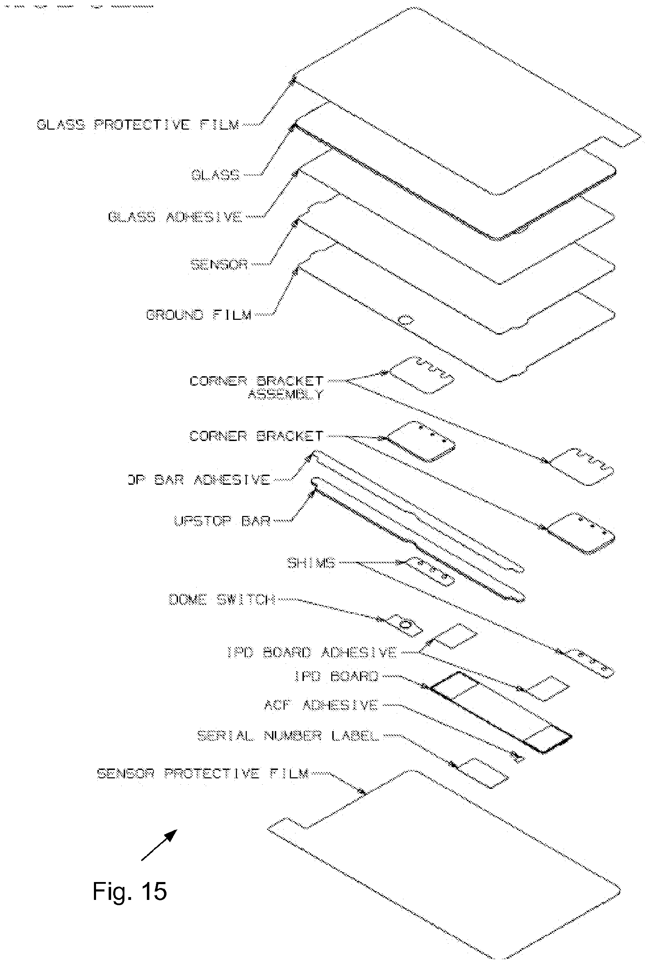

Fig. 15 shows an exploded view of touch pad 116 in accordance with the described embodiments.

Although the foregoing invention has been described in detail by way of illustration and example for purposes of clarity and understanding, it will be recognized that the above described invention may be embodied in numerous other specific variations and embodiments without departing from the essential characteristics of the invention. Certain changes and modifications may be practiced, and it is understood that the invention is not to be limited by the foregoing details, but rather is to be defined by the scope of the appended claims.

## Claims

1. A portable computing device (100), comprising:
a wedge shaped base portion (102) comprising a first end and a tapered second end narrower than the first end, the wedge shaped base portion having an inclined top surface and configured to support and enclose a plurality of operational components (210), the wedge shaped base portion further configured to present one or more user input components at an angle to an end user of the portable computing device, the user input components presented at the angle to the end user comprising:
a keyboard (114) located on the base portion and adapted to accept inputs from a user of the portable computing device; and
a touch pad (116) located within and proximate to a touch pad opening (162) in the base portion at the second end, the touch pad being adapted to accept touch inputs from a user of the portable computing device, **characterized in that** the touch pad comprises:
a glass layer (216) having a top surface (230) adapted to accept the touch inputs from a user, wherein the glass layer is further adapted to provide primary structural rigidity for the touch pad and has a thinned region (221a) adjacent to the tapered second end of the base portion,
a cosmetic layer (234) located below the glass layer,
a sensor layer (224) bonded to the cosmetic layer and adapted to detect inputs at the top surface of the glass layer,
circuitry adapted to process signals from the sensor layer, and
a connection interface (206) that connects the circuitry to a main logic board on the portable computing device.

2. The portable computing device of claim 1, wherein the top surface (230) of the glass layer (216) is flat.

3. The portable computing device of claim 2, wherein a portion (221a) of the glass layer (230) that is closest to the tapered second end is adjacent to a lip (223a) defined by a front side of the touch pad opening.

4. The portable computing device of any of the preceding claims, wherein the touch pad (116) further comprises:
a keyboard connection interface (208) adapted to connect the circuitry to the keyboard (114), wherein the circuitry is also adapted to process signals from the keyboard.

5. The portable computing device of any of the preceding claims, wherein the touch pad (116) further comprises:
a dome switch (220) mounted at a bottom surface of the touch pad, wherein the dome switch is actuated by a downward force applied by a user at the top of the touch pad, and
a sealing mechanism (218) associated with and situated proximate to the dome switch.

6. The portable computing device of claim 5, wherein the dome switch (220) is embedded in a recessed region of the bottom surface of the touch pad.

7. The portable computing device of claim 5 or claim 6, wherein the dome switch (220) is constructed from a flexible material that partially encloses a volume of gas within the dome switch.

8. The portable computing device of claim 7, wherein the sealing mechanism (218) surrounds the dome switch (220) and includes one or more apertures (254), and wherein one or more portions of the dome switch expand through the one or more apertures during actuation of the dome switch.

9. The portable computing device of any of the preceding claims, wherein the touch pad (116) further comprises:
a plurality of wings (214a, 214b) located along the sides of the touch pad and adapted to keep the touch pad within the base portion (102).

10. The portable computing device of any of the preceding claims, wherein the touch pad (116) is located proximate the thinnest part of the wedge shaped base portion (102).

11. A method for assembling a laptop computer, the method comprising:
coupling a wedge shaped top case (106) and a bottom case (104) to form a base portion (102);
pivotally connecting the wedge shaped base portion to a lid portion (108);
electrically connecting components in the base portion and components in the lid portion, and locating a touch pad (116) within the base portion proximate the thinnest part of the wedge shaped top case, the touch pad comprising:
a glass layer (216) on a first surface adapted to accept a touch input from a user and having a thinned region (221a) adjacent to the thinnest part of the wedge-shaped top case;
a sensor layer (224) below the glass layer, the sensor layer adapted to detect the touch input; and
a connection interface (206) coupling a circuitry adapted to process a signal from the sensor layer, with a main logic board in the portable computing device.

12. The method of claim 11, wherein the touch pad (116) further comprises:
a recess region on a bottom surface of the touch pad;
a dome switch (220) on the recess region, the dome switch configured to receive a downward force applied by the user at the top of the touch pad; and
a sealing mechanism (218) proximate to the dome switch.

13. The method of claim 12, wherein the sealing mechanism (218) includes one or more apertures (254) arranged so that one or more portions of the dome switch (220) expand through the one or more apertures when the dome switch receives the downward force applied by the user.

14. The method of any of claims 11 to 13, wherein the touch pad (116) further comprises:
a plurality of wings (214a, 214b) along the sides of the touch pad, the wings adapted to keep the touch pad within the base portion (102).

15. The method of any of claims 11 to 14, wherein the touch pad (116) further comprises a stiffener bar (212) below the sensor layer (224), the stiffener bar reaching from one edge of the touch pad to an opposite edge of the touch pad, thus increasing the structural rigidity of the touch pad.

## Patentansprüche

1. Tragbare Computervorrichtung (100), die aufweist:
ein keilförmiges Basisteil (102), das ein erstes Ende und ein sich verjüngendes zweites Ende aufweist, das schmaler als das erste Ende ist, wobei das keilförmige Basisteil eine geneigte obere Oberfläche hat und konfiguriert ist, um eine Vielzahl von operationalen Komponenten (210) zu tragen und einzuschließen, wobei das keilförmige Basisteil weiter konfiguriert ist, um eine oder mehrere Benutzereingabekomponenten in einem Winkel einem Endbenutzer der tragbaren Computervorrichtung zu präsentieren, wobei die Benutzereingabekomponenten, die in dem Winkel dem Endbenutzer präsentiert werden, aufweisen:
eine Tastatur (114), die auf dem Basisteil angeordnet ist, und geeignet ist, um Eingaben von einem Benutzer der tragbaren Computervorrichtung zu akzeptieren; und
ein Berührungsfeld (116), das in und benachbart zu einer Berührungsfeldöffnung (162) in dem Basisteil an dem zweiten Ende angeordnet ist, wobei das Berührungsfeld geeignet ist, um Berührungseingaben von dem Benutzer der tragbaren Computervorrichtung zu akzeptieren, **dadurch gekennzeichnet, dass** das Berührungsfeld aufweist:
eine Glasschicht (216) mit einer oberen Oberfläche (230), die geeignet ist, um die Berührungseingaben von einem Benutzer zu akzeptieren, wobei die Glasschicht weiter geeignet ist, eine erste strukturelle Steifheit für das Berührungsfeld bereitzustellen, und einen verdünnten Bereich (221a) aufweist, benachbart zu dem verjüngten zweiten Ende des Basisteiles,
eine kosmetische Schicht (234), die unter der Glasschicht angeordnet ist,
eine Sensorschicht (224), die mit der kosmetischen Schicht verbunden ist und geeignet ist, um Eingaben an der oberen Oberfläche der Glasschicht zu erfassen, Schaltungen, die geeignet sind, um Signale von der Sensorschicht zu verarbeiten, und
eine Verbindungsschnittstelle (206), die die Schaltung zu einer Hauptlogikkarte auf der tragbaren Computervorrichtung verbindet.

2. Tragbare Computervorrichtung gemäß Anspruch 1, wobei die obere Oberfläche (230) der Glasschicht (216) flach ist.

3. Tragbare Computervorrichtung gemäß Anspruch 2, wobei ein Teil (221a) der Glasschicht (230), das am nächsten zu dem verjüngten zweiten Ende ist, benachbart zu einer Lippe (223a) ist, die durch eine vordere Seite der Öffnung des Berührungsfeldes definiert ist.

4. Tragbare Computervorrichtung gemäß einem der vorangehenden Ansprüche, wobei das Berührungsfeld (116) weiter aufweist:
Eine Tastaturverbindungsschnittstelle (208), die geeignet ist, um die Schaltung mit der Tastatur (214) zu verbinden, wobei die Schaltung auch geeignet ist, um Signale von der Tastatur zu verarbeiten.

5. Tragbare Computervorrichtung gemäß einem der vorangehenden Ansprüche, wobei das Berührungsfeld (116) weiter aufweist:
einen Domschalter (220), der auf einer unteren Oberfläche des Berührungsfeldes montiert ist, wobei der Domschalter durch eine nach unten gerichtete Kraft betätigt wird, die von einem Benutzer an der Oberseite des Berührungsfeldes aufgebracht wird, und
einen Versiegelungsmechanismus (218), der mit dem Domschalter verknüpft ist und benachbart zu ihm angeordnet ist.

6. Tragbare Computervorrichtung gemäß Anspruch 5, wobei der Domschalter (220) in einer ausgenommenen Region der unteren Oberfläche des Berührungsfeldes eingebettet ist.

7. Tragbare Computervorrichtung gemäß Anspruch 5 oder 6, wobei der Domschalter (220) aus einem flexiblen Material konstruiert ist, das teilweise ein Gasvolumen in dem Domschalter einschließt.

8. Tragbare Computervorrichtung gemäß Anspruch 7, wobei der Versiegelungsmechanismus (218) den Domschalter (220) umrundet und ein oder mehrere Öffnungen (254) umfasst und wobei ein oder mehrere Teile des Domschalters sich durch die eine oder die mehreren Öffnungen während der Bewegung des Domschalters ausdehnen.

9. Tragbare Computervorrichtung gemäß einem der vorangehenden Ansprüche, wobei das Berührungsfeld (216) weiter aufweist:
eine Vielzahl von Schwingen (214a, 214b), die längs der Seiten des Berührungsfeldes angeordnet sind und geeignet sind, um das Berührungsfeld in dem Basisteil (102) zu halten.

10. Tragbare Computervorrichtung gemäß einem der vorangehenden Ansprüche, wobei das Berührungsfeld (116) in der Nähe des dünnsten Teiles des keilförmigen Basisteiles (102) angeordnet ist.

11. Verfahren zum Zusammenbauen eines Laptop-Computers, wobei das Verfahren aufweist:
Koppeln eines keilförmigen oberen Gehäuses (106) und eines unteren Gehäuses (104), um ein Basisteil (102) zu bilden;
schwenkbar Verbinden des keilförmigen Basisteiles mit einem Deckelteil (108);
elektrisch Verbinden von Komponenten in dem Basisteil und von Komponenten in dem Deckelteil und Anordnen eines Berührungsfeldes (116) innerhalb des Basisteiles in der Nähe des dünnsten Teils des keilförmigen oberen Gehäuses,
wobei das Berührungsfeld aufweist:
eine Glasschicht (216) auf einer ersten Oberfläche, die geeignet ist, um eine Berührungseingabe von einem Benutzer zu akzeptieren, und die eine ausgedünnte Region (221a) hat, die benachbart zu dem dünnsten Teil des keilförmigen oberen Gehäuses ist;
eine Sensorschicht (224) unter der Glasschicht, wobei die Sensorschicht geeignet ist, um die Berührungseingabe zu erfassen; und
eine Verbindungsschnittstelle (206), die eine Schaltung, die geeignet ist, um ein Signal von der Sensorschicht zu verarbeiten, mit einer Hauptlogikkarte in der tragbaren Computervorrichtung koppelt.

12. Verfahren gemäß Anspruch 11, wobei das Berührungsfeld (116) weiter aufweist:
eine ausgenommene Region auf der unteren Oberfläche des Berührungsfeldes;
einen Domschalter (220) auf der ausgenommenen Region, wobei der Domschalter konfiguriert ist, um eine nach unten gerichtete Kraft zu empfangen, die von einem Benutzer an dem oberen Teil des Berührungsfeldes aufgebracht wird; und
einen Versiegelungsmechanismus (218) in der Nähe des Domschalters.

13. Verfahren gemäß Anspruch 12, wobei der Versiegelungsmechanismus (218) ein oder mehrere Öffnungen (254) umfasst, die so angeordnet sind, dass ein oder mehrere Teile des Domschalters (220) sich durch die eine oder die mehreren Öffnungen erstrecken, wenn der Domschalter die nach unten gerichtete Kraft empfängt, die von dem Benutzer aufgebracht wird.

14. Verfahren gemäß einem der Ansprüche 11 bis 13, wobei das Berührungsfeld (116) weiter aufweist:
eine Vielzahl von Schwingen (214a, 214b) längs der Seiten des Berührungsfeldes, wobei die Schwingen geeignet sind, um das Berührungsfeld in dem Basisteil (102) zu halten.

15. Verfahren gemäß einem der Ansprüche 11 bis 14, wobei das Berührungsfeld (116) weiter einen Versteifungsbalken (212) unterhalb der Sensorschicht (224) aufweist, wobei der Versteifungsbalken sich von einer Kante des Berührungsfeldes zu einer gegenüberliegenden Kante des Berührungsfeldes erstreckt und dadurch die strukturelle Steifheit des Berührungsfeldes erhöht.

## Revendications

1. Un dispositif informatique portable (100), comprenant :
une partie de base en forme de coin (102) comprenant une première extrémité et une seconde extrémité rétrécie plus étroite que la première extrémité, la partie de base en forme de coin ayant une surface supérieure inclinée et étant configurée pour supporter et enfermer une pluralité de composants opérationnels (210), la partie de base en forme de coin étant en outre configurée pour présenter un ou plusieurs composants d'entrée utilisateur sous un angle à un utilisateur final du dispositif informatique portable, les composants d'entrée utilisateur présentés sous l'angle à l'utilisateur final comprenant :
un clavier (114) situé sur la partie de base et apte à accepter des entrées provenant d'un utilisateur du dispositif informatique portable ; et
un pavé tactile (116) situé à l'intérieur et à proximité d'une ouverture de pavé tactile (162) dans la partie de base au niveau de la seconde extrémité, le pavé tactile étant apte à accepter des entrées tactiles provenant d'un utilisateur du dispositif informatique portable,
**caractérisé en ce que** le pavé tactile comprend :
une couche de verre (216) avec une surface supérieure (230) apte à accepter les entrées tactiles provenant d'un utilisateur, la couche de verre étant en outre apte à procurer une rigidité structurelle primaire au pavé tactile et possédant une région amincie (221a) adjacente à la seconde extrémité rétrécie de la partie de base,
une couche cosmétique (234) située au-dessous de la couche de verre,
une couche de capteur (224) collée à la couche cosmétique et apte à détecter des entrées au niveau de la surface supérieure de la couche de verre,
une circuiterie apte à traiter des signaux provenant de la couche de capteur, et
une interface de connexion (206) qui connecte la circuiterie à une carte logique principale sur le dispositif informatique portable.

2. Le dispositif informatique portable de la revendication 1, dans lequel la surface supérieure (230) de la couche de verre (216) est plate.

3. Le dispositif informatique portable de la revendication 2, dans lequel une partie (221a) de la couche de verre (216) qui est la plus proche de la seconde extrémité rétrécie est adjacente à une lèvre (223a) définie par un côté avant de l'ouverture de pavé tactile.

4. Le dispositif informatique portable de l'une des revendications précédentes, dans lequel le pavé tactile (116) comprend en outre :
une interface de connexion de clavier (208) apte à connecter la circuiterie au clavier (114), la circuiterie étant également apte à traiter des signaux provenant du clavier.

5. Le dispositif informatique portable de l'une des revendications précédentes, dans lequel le pavé tactile (116) comprend en outre :
un interrupteur à dôme (220) monté sur une surface de fond du pavé tactile, le commutateur à dôme étant actionné par une force dirigée vers le bas appliquée par un utilisateur sur le dessus du pavé tactile, et
un mécanisme d'étanchéité (208) associé au commutateur à dôme et situé à proximité de celui-ci.

6. Le dispositif informatique portable de la revendication 5, dans lequel le commutateur à dôme (220) est incorporé dans une région en creux de la surface de fond du pavé tactile.

7. Le dispositif informatique portable de la revendication 5 ou de la revendication 6, dans lequel le commutateur à dôme (220) est réalisé à partir d'un matériau flexible qui enferme en partie un volume de gaz à l'intérieur du commutateur à dôme.

8. Le dispositif informatique portable de la revendication 7, dans lequel le mécanisme d'étanchéité (218) entoure le commutateur à dôme (220) et comprend une ou plusieurs ouvertures (254), et dans lequel une ou plusieurs parties du commutateur à dôme s'étendent au travers des une ou plusieurs ouvertures lorsque le commutateur à dôme est actionné.

9. Le dispositif informatique portable de l'une des revendications précédentes, dans lequel le pavé tactile (116) comprend en outre :
une pluralité d'ailettes (214a, 214b) situées le long des côtés du pavé tactile et aptes à maintenir le pavé tactile à l'intérieur de la partie de base (102).

10. Le dispositif informatique portable de l'une des revendications précédentes, dans lequel le pavé tactile (116) est situé à proximité de la partie la plus mince de la partie de base en forme de coin (102).

11. Un procédé d'assemblage d'un ordinateur portable, le procédé comprenant :
le couplage d'un boitier de dessus en forme de coin (106) et d'un boitier de dessous (104) pour former une partie de base (102) ;
la connexion à pivotement de la partie de base en forme de coin à une partie de couvercle (108) ;
la connexion électrique de composants dans la partie de base et de composants dans la partie de couvercle, et le positionnement d'un pavé tactile (116) à l'intérieur de la partie de base à proximité de la partie la plus mince du boitier de dessus en forme de coin, le pavé tactile comprenant :
une couche de verre (216) sur une première surface apte à recevoir une entrée tactile provenant d'un utilisateur et possédant une région amincie (221a) adjacente à la partie la plus mince du boitier de dessus en forme de coin ;
une couche de capteur (224) au-dessous de la couche de verre, la couche de capteur étant apte à détecter l'entrée tactile ; et
une interface de connexion (206) couplant une circuiterie apte à traiter un signal provenant de la couche de capteur avec une carte logique principale dans le dispositif informatique portable.

12. Le procédé de la revendication 11, dans lequel le pavé tactile comprend en outre :
une région en creux sur une surface de fond du pavé tactile ;
un commutateur à dôme (220) sur la région en creux, le commutateur à dôme étant configuré pour recevoir une force dirigée vers le bas appliquée par l'utilisateur sur le dessus du pavé tactile ; et
un mécanisme d'étanchéité (218) à proximité du commutateur à dôme.

13. Le procédé de la revendication 12, dans lequel le mécanisme d'étanchéité comprend une ou plusieurs ouvertures (254) agencées de telle sorte qu'une ou plusieurs parties du commutateur à dôme (220) s'étendent au travers des une ou plusieurs ouvertures lorsque le commutateur à dôme reçoit la force vers le bas appliquée par l'utilisateur.

14. Le procédé de l'une des revendications 11 à 13, dans lequel le pavé tactile (116) comprend en outre :
une pluralité d'ailettes (214a, 214b) le long des côtés du pavé tactile, les ailettes étant aptes à maintenir le pavé tactile à l'intérieur de la partie de base (102).

15. Le procédé de l'une des revendications 11 à 14, dans lequel le pavé tactile (116) comprend en outre une barre de rigidification (212) au-dessous de la couche de capteur (224), la barre de rigidification allant d'un bord du pavé tactile à un bord opposé du pavé tactile, pour augmenter ainsi la rigidité structurelle du pavé tactile.
